# EUROPÄISCHE PATENTSCHRIFT

(11) **EP 1 737 641 B1**
(45) Veröffentlichungstag und Bekanntmachung des Hinweises auf die Patenterteilung: **30.05.2007**
(21) Anmeldenummer: 05729039.7
(22) Anmeldetag: 07.04.2005
(51) Int. Cl.: B29C 47/88, B29C 53/10, B29C 47/90

(54) **VORRICHTUNG ZUM TRANSPORT EINES FOLIENSCHLAUCHES**
DEVICE FOR CONVEYING A TUBULAR FILM
DISPOSITIF DE TRANSPORT D'UN FILM TUBULAIRE

(30) Priorität: 14.04.2004 DE 102004017952
(43) Veröffentlichungstag der Anmeldung: 03.01.2007
(73) Patentinhaber: Windmöller & Hölscher KG, 49525 Lengerich (DE)
(72) Erfinder: ARCAN, Metin, 49525 Lengerich (DE)
(86) Internationale Anmeldenummer: PCT/EP2005/003640
(87) Internationale Veröffentlichungsnummer: WO 2005/102666

(56) Entgegenhaltungen:
- GB-A- 1 320 552
- GB-A- 2 201 371
- US-A- 5 458 841

## Beschreibung

Die Erfindung betrifft eine Vorrichtung zum Transport eines Folienschlauches nach dem Oberbegriff des Anspruchs 1.

Eine solche Vorrichtung ist bereits aus US-A-5 458 841 bekannt. Sie wird in der Regel in Anlagen zum Herstellen von Folienschläuchen oder Folienbahnen verwendet. Solchen Anlagen werden Kunststoffe in granulierter Form zugeführt, die dann in Extrudern unter hoher Druckeinwirkung zu einer viskosen Masse plastifiziert werden. Diese Masse, die aufgrund des Druckes eine hohe Temperatur aufweist, wird in einem Blaskopf ringförmig ausgebildet und entweicht dem Blaskopf durch eine Ringdüse. Unmittelbar nach dem Verlassen der Ringdüse bildet die Masse bereits einen Folienschlauch. Nach dem Durchlaufen eines so genannten Kalibrierkorbes wird der Folienschlauch entlang weiterer Folienführungselemente geführt, die den Schlauch flachlegen. Diese Flachlegeeinheit führt den Folienschlauch häufig einer Vorabquetschung zu, so dass dieser nahezu eine doppellagige Folienbahn bildet. Die Vorabquetschung besteht meist aus einem Paar von Walzen, durch dessen Walzenspalt die Folie hindurch läuft. Der Vorabquetschung folgt eine Abquetschung, in der aus dem Folienschlauch endgültig eine doppellagige Folienbahn gebildet wird. Der Abstand von der Vorabquetschung zur Abquetschung ist so bemessen, dass die Folienbahn im Verlauf des Transportes zwischen den beiden Walzenpaaren noch vom Extrusionsprozess stammende Wärme abgeben kann. Auf diese Weise wird der Folienschlauch also zusätzlich gekühlt, so dass er anschließend weiter verarbeitet werden kann. Dazu gehört beispielsweise das Auftrennen des Folienschlauches, so dass zwei Folienbahnen entstehen, und/oder das Aufwickeln des Folienschlauches oder der Folienbahn. Eine derartige kühlung des Folienschlauches kann aber generell zwischen zumindest zwei beliebigen Folienführungselementen stattfinden. Es muss lediglich die Möglichkeit vorhanden sein, dass der Folienschlauch Wärme an seine Umgebung abgeben kann.

Bei bekannten Vorrichtungen dieser Art ergibt sich jedoch häufig das Problem, dass - je nach Folienart und -dicke - der Folienschlauch zwischen zwei Folienführungselementen nicht ausreichend auskühlen kann, um weiterverarbeitet werden zu können. Insbesondere kann es bei einem nicht ausreichenden Abkühlen zu einem Verkleben der doppellagigen Folienbahn kommen, so dass ein späteres Auseinanderziehen, beispielsweise bei der Herstellung und Befüllung von Beuteln aus Folienschlauch, nicht mehr oder nicht ohne Beschädigungen möglich ist. Andererseits kann eine zu starke Auskühlung der Folie zu einer unerwünschten Steifigkeit selbiger führen, so dass diese zur Faltenbildung oder bei folgenden Verarbeitungsschritten zum Reißen neigt.

Die Aufgabe der vorliegenden Erfindung ist es daher, eine Vorrichtung zum Transport eines Folienschlauches zu schaffen, in der nahezu alle Arten von Folienschläuchen während des Transportes derart auskühlen können, dass sie ordnungsgemäß weiter verarbeitet werden können.

Erfindungsgemäß wird diese Aufgabe durch die Merkmale des kennzeichnenden Teiles des Anspruchs 1 gelöst. Auf diese Weise kann der Bereich, in welchem der Folienschlauch Wärme an seine Umgebung abgibt vergrößert oder verkleinert und so auf die Folienart eingestellt werden. Folienführungselemente können dabei etwa die Walzen von Vorabquetschung oder Abquetschung sein, jedoch auch Umlenkwalzen, Wendestangen, Breitstreckwalzen, welche an beliebigen Stellen der Vorrichtung zwischen Blaskopf und Wickelstelle angeordnet sein können. Besonders zu betonen ist, dass es auch berührungslose Folienführungselemente gibt, mit welchen ein Luftpolster erzeugt wird, auf welchem dann der Folienschlauch geführt wird. Diese werden beispielsweise in Kalibrierkörben eingesetzt.

Besonders vorteilhafte Ausgestaltungen der Erfindung sind der Gegenstand der Unteransprüche.

### Weitere Ausführungsbeispiele der Erfindung gehen aus der gegenständlichen

Beschreibung, den Ansprüchen und der Zeichnung hervor.
Die einzelnen Figuren zeigen:
- Fig. 1: Ansicht einer Blasfolienextrusionsanlage mit einer erfindungsgemäßen Vorrichtung
- Fig. 2: Ein Ausführungsbeispiel einer erfindungsgemäßen Vorrichtung
- Fig. 3: Ein weiteres Ausführungsbeispiel einer erfindungsgemäßen Vorrichtung
- Fig. 4: Perspektivische Ansicht eines Ausschnitts aus Fig. 3.

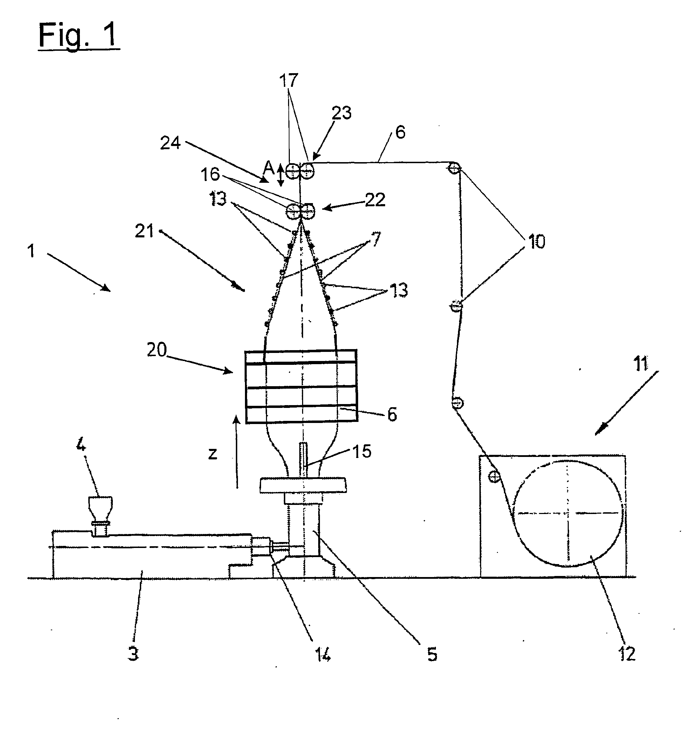

Fig. 1 zeigt eine an sich bekannte Blasfolienextrusionsanlage 1, jedoch mit einer erfindungsgemäßen Vorrichtung zum Transport und Kühlen eines Folienschlauches.
Dem Einfüllstutzen 4 wird ein Kunststoff zugeführt, der dann in dem Extruder 3 plastifiziert wird. Die entstandene Masse wird über eine Verbindungsleitung 14 dem Blaskopf 5 zugeführt, welcher einen Folienschlauch 6 bildet. Dabei verlässt der Folienschlauch 6 den Blaskopf 5 durch eine nicht sichtbare Ringdüse in Transportrichtung z. Aufgrund der Zuführung von Druckluft durch den Gebläsestutzen 15 wird der Folienschlauch 6 unmittelbar nach Verlassen des Blaskopfes 5 aufgeweitet. Der Durchmesser des Folienschlauches 6 wird jedoch durch den Kalibrierkorb 20 begrenzt. Nach dem Verlassen des Kalibrierkorbes 20 gelangt der Folienschlauch 6 in eine Flachlegeeinheit 21, in welcher der Folienschlauch nahezu zu einer doppellagigen Folienbahn umgeformt wird. Dabei wird der Folienschlauch zwischen Paaren von Führungselementen 13 geführt, die an dachförmig angestellten Platten oder Trägern 7 angebracht sind, so dass sie 13 im Verlauf der Transportrichtung z einen immer geringeren Abstand voneinander einnehmen.

Nach Durchlaufen der Flachlegeeinheit 21 erreicht der Folienschlauch 6 die Vorrichtung zum Transport und Kühlen 24. Hier wird der Folienschlauch 6 zunächst der Vorabquetschung 22 zugeführt, welche aus einem Paar von Vorabquetschwalzen 16 besteht. Die vollständige Flachlegung erfolgt durch die Abquetschung 23, die aus einem Paar von Abquetschwalzen 17 besteht. Die Folienbahn 6 kann nun durch eine nicht gezeigte Reversiervorrichtung geführt werden, oder, wie im Falle der gezeigten Vorrichtung, direkt über Umlenkwalzen 10 einer Wickelvorrichtung 11 zugeführt werden, wo die Folienbahn 6 zu einem Wickel 12 verarbeitet wird.

Die zur Abquetschung dienenden Abquetschwalzen 17 sind auf nicht dargestellte Weise verschieblich im Maschinenrahmen gelagert, so dass sie 17 entlang des Doppelpfeiles A bewegbar sind. Auf diese Weise kann die Streckenlänge zwischen der Vorabquetschung 22 und der Abquetschung 23 so verändert werden, dass der Folienschlauch 6 ausreichend abkühlen kann.

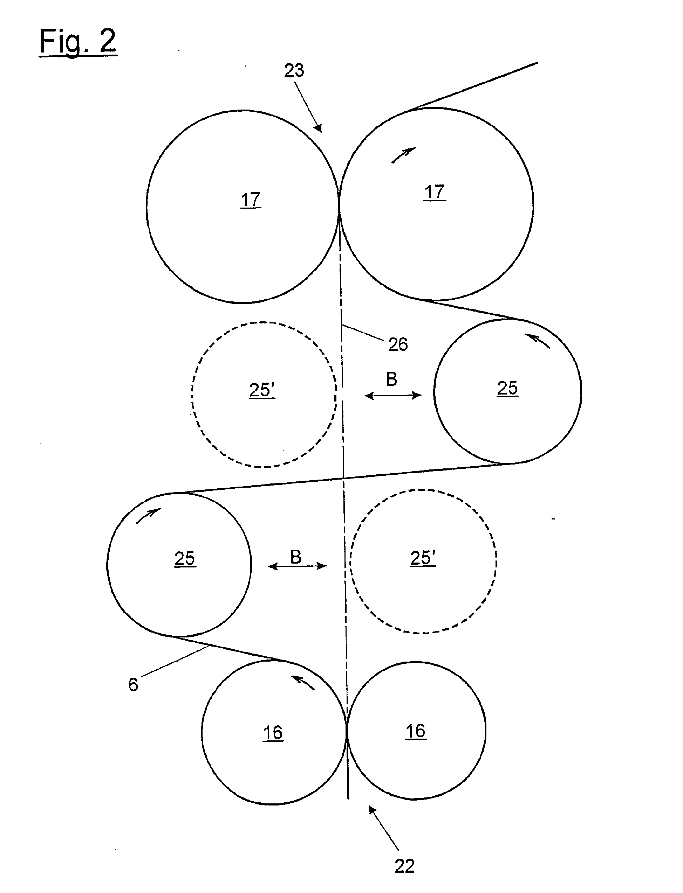

Die Fig. 2 zeigt ein weiteres Ausführungsbeispiel einer erfindungsgemäßen Vorrichtung zum Transport und zum Kühlen 24 des Folienschlauches 6. Diese besteht neben den Vorabquetschwalzen 16 und den Abquetschwalzen 17 aus weiteren Walzen 25. Diese weiteren Walzen 25 sind derart im Maschinenrahmen gelagert, dass sie linear verfahren werden können. Im gezeigten Beispiel sind diese entlang der Doppelpfeile B bewegbar. Die Lage der Verschiebelinien ist aber nicht auf das in der Figur gezeigte Beispiel beschränkt. Für jede Walze 25 kann es unabhängige Verschieberichtungen geben. In der mit 25' bezeichneten Position der Walzen (gestrichelte Darstellung) stehen die Walzen noch nicht in Kontakt mit dem Folienschlauch 6. In diesem Fall wird der Folienschlauch 6 entlang dem direkten Weg 26 zwischen der Vorabquetschung 22 und der Abquetschung 23 geführt. Werden nun die Walzen 25 verschoben, so werden sie mit zunehmendem Verschiebeweg von dem Folienschlauch 25 immer weiter umschlungen. Zudem wird die von dem Folienschlauch zwischen der Vorabquetschung 22 und der Abquetschung 23 zurückgelegte Streckenlänge größer. Bei gegensätzlichen Verschieberichtungen der Walzen 25 wird, wie es in der Fig. 2 dargestellt ist, dieser Effekt sogar noch verstärkt.

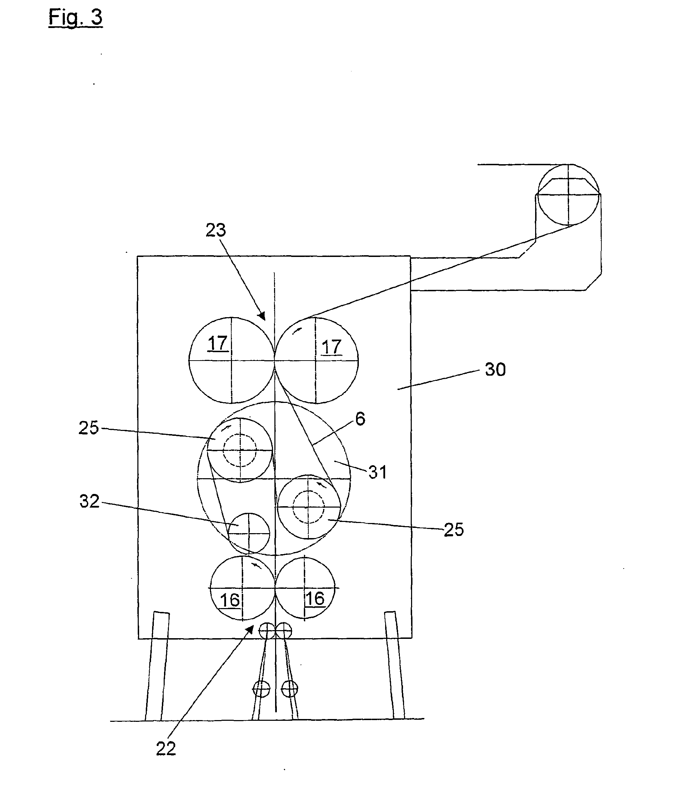

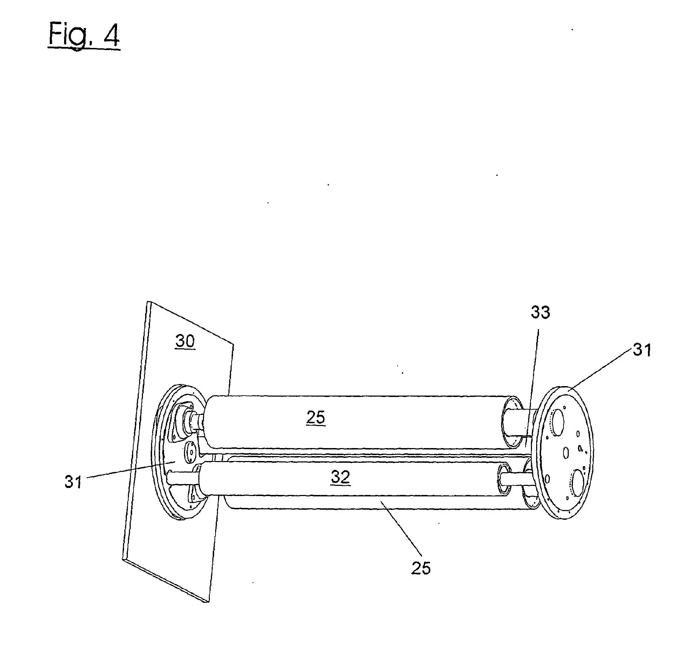

Die in den Fig. 3 und 4 gezeigte Ausführungsform der Erfindung umfasst einen Rahmen 30, dessen vordere Rahmenplatte aus Gründen der Übersichtlichkeit nicht dargestellt ist. In diesem Rahmen 30 ist die Vorabquetschung 22 mit den Vorabquetschwalzen 22 und die Abquetschvorrichtung 23 mit den Abquetschwalzen 17 gelagert. In jeder Rahmenplatte des Rahmens 30 ist zusätzlich eine Scheibe 31 drehbar gelagert. Beide Scheiben können zwecks Synchronisation ihrer Rotation mit einer Traverse 33 miteinander verbunden sein. In jeder Scheibe 31 ist je ein Ende der Walzen 25 drehbar gelagert. Zusätzlich kann parallel zu den Walzen 25 eine oder mehrere Umlenkwalzen 32 vorgesehen sein. Jedoch ist vorgesehen, lediglich die Walzen 25 als Kühlwalzen auszubilden. Zur Drehung der Scheibe 31 ist ein nicht dargestellter Antrieb vorgesehen.

Die Walzen 25 können über die im Folgenden beschriebene Weise angetrieben werden. Die Walzen 16 und 17 können mit Hilfe eines einzigen Antriebs über nicht dargestellte Drehmomentübertragungsmittel, etwa Riemen oder Ketten, angetrieben werden. Diese Riemen oder Ketten können auf ein ebenfalls nicht dargestelltes Zahnrad oder ein weitere Scheibe wirken, dessen Drehachse auf der Drehachse der Scheiben 31 liegt, aber relativ zur Scheibe 31 rotierbar ist. Das Zahnrad oder die weitere Scheibe überträgt das Drehmoment auf ein zweites Zahnrad oder noch eine weitere Scheibe, die dann über weitere Riemen oder Ketten die Walzen 35 antreiben. Bei der Drehung der Scheiben 31 brauchen die weiteren Riemen oder Ketten nicht angepasst zu werden, da, wie bereits beschrieben, die Walzen 25 einen konstanten Abstand zur Drehachse der Scheiben 31 aufweisen. Die beschriebene Anordnung ermöglicht es, auch bei relativ zur Vorabquetschung oder Abquetschung bewegbaren Walzen 25 alle Walzen 16, 17, 25, von einen einzigen Antrieb ausgehend, in Rotation zu versetzen. Eine solche Konstruktion ist kostengünstig.

| **Bezugszeichenliste** | |
|---|---|
| 1 | Blasfolienextrusionsanlage |
| 2 | |
| 3 | Extruder |
| 4 | |
| 5 | Blaskopf |
| 6 | Folienschlauch |
| 7 | Träger |
| 8 | |
| 9 | |
| 10 | Umlenkwalze |
| 11 | Wickelvorrichtung |
| 12 | Wickel |
| 13 | Führungselement |
| 14 | Verbindungsleitung |
| 15 | Gebläsestutzen |
| 16 | Vorabquetschwalze |
| 17 | Abquetschwalze |
| 18 | |
| 19 | |
| 20 | Kalibrierkorb |
| 21 | Flachlegeeinheit |
| 22 | Vorabquetschung |
| 23 | Abquetschung |
| 24 | Vorrichtung zum Transport und Kühlen |
| 25 | Walzen |
| 25' | Position der Walzen |
| 26 | Direkter Weg |
| 27 | |
| 28 | |
| 29 | |
| 30 | Rahmen |
| 31 | Scheibe |
| 32 | Umlenkwalze |
| 33 | Traverse |
| 34 | |
| 35 | |
| | |
| A | Doppelpfeil |
| z | Transportrichtung |

## Patentansprüche

1. Vorrichtung zum Transportieren eines Folienschlauches (6), in welcher der Folienschlauch (6) über zumindest ein erstes Folienführungselement (16), über zumindest ein zweites Folienführungselement (25) und über zumindest ein drittes Folienführungselement (17) geführt wird, wobei der Folienschlauch (6) im Bereich zwischen dem ersten und dem zumindest einen dritten Folienführungselement und/oder im Bereich der Folienführungselemente Wärme an seine Umgebung abgeben kann,
wobei der Abstand zwischen dem ersten und dem zweiten Folienführungselement veränderbar ist,
**dadurch gekennzeichnet, dass**
das zumindest eine zweite Folienführungselement (25) relativ zum ersten Folienführungselement (16) derart verstellbar ist, dass der Folienschlauch (6) aus dem direkten Weg zwischen erstem und drittem Folienführungselement ablenkbar ist, so dass die zwischen dem ersten und dem dritten Follenführungselement zurückgelegte Streckenlänge des Folienschlauches veränderbar ist.

2. Vorrichtung nach Anspruch 1,
**dadurch gekennzeichnet, dass**
der Abstand zwischen dem ersten und dem zweiten Folienführungselement stufenlos veränderbar ist.

3. Vorrichtung nach einem der beiden vorstehenden Ansprüche,
**dadurch gekennzeichnet, dass**
das erste Folienführungselement Bestandteil eines ersten Walzenpaares (25) ist, durch dessen Walzenspalt der Folienschlauch (6) in einen kühlenden Bereich einläuft, und **dass**
das zweite Folienführungselement Bestandteil eines zweiten Walzenpaares (25) ist, durch dessen Walzenspalt der Folienschlauch (6) den kühlenden Bereich verlässt.

4. Vorrichtung nach einem der vorstehenden Ansprüche,
**dadurch gekennzeichnet, dass**
zumindest zwei zweite Follenführungselemente (25) vorgesehen sind, welche relativ zum ersten und/oder dritten Folienführungselement verschieb- oder verfahrbar angeordnet sind.

5. Vorrichtung nach dem vorstehenden Anspruch,
**dadurch gekennzeichnet, dass**
die zumindest zwei zweiten Folienführungselemente in Haltemitteln gelagert sind.

6. Vorrichtung nach dem vorstehenden Anspruch,
**dadurch gekennzeichnet, dass**
die Haltemittel drehbar im Maschinenrahmen (30) gelagert sind.

7. Vorrichtung nach dem vorstehenden Anspruch,
**dadurch gekennzeichnet, dass**
die Haltemittel mit einem Antriebsmittel versehen sind, mit welchem der Drehwinkel einstellbar ist.

8. Vorrichtung nach einem der drei vorstehenden Ansprüche,
**dadurch gekennzeichnet, dass**
die Haltemittel als Drehscheibe (31) ausgebildet sind.

9. Vorrichtung einem der vorstehenden Ansprüche,
**dadurch gekennzeichnet, dass**
zumindest eines der Follenführungselemente als Kühlwalze ausgebildet ist.

## Claims

1. Device for transportation of a film tube (6), in which the film tube (6) is guided by means of at least one first film guide element (16), at least one second film guide element (25) and at least one third film guide element (17), whereby the film tube (6) can discharge heat to its environment in the area between the first and at least one third film guide element and/or in the area of the film guide elements,
whereby the distance between the first and the second element is variable,
**characterized in that**
at least one second film guide element (25) can be adjusted relative to the first film guide element (16) in such a manner that the film tube (6) can be deflected from the direct path between the first and the third film guide element, so that the path length traversed by the film tube between the first and the third film guide element is variable.

2. Device according to claim 1,
**characterized in that**
the distance between the first and the second film guide element is continuously variable.

3. Device according to one of the preceding two claims,
**characterized in that**
the first film guide element is an integral part of the first roller pair (25), through the clearance between which rollers, the film tube (6,9) enters into a chilled area and that
the second film guide element is an integral part of the second roller pair (25), through the clearance between which rollers, the film tube (6,9) leaves the chilled area.

4. Device according to one of the preceding claims,
**characterized in that**
at least two second film guide elements (25) are provided, which are arranged in displaceable or maneuverable manner relative to the first and/or the third film guide element.

5. Device according to the preceding claim,
**characterized in that**
the additional film guide elements, of which at least two are provided, are mounted in holders.

6. Device according to the preceding claim,
**characterized in that**
the holder is mounted in the machine frame (30) rotatably.

7. Device according to the preceding claim,
**characterized in that**
the holder is provided with a drive, with which the angle of rotation can adjusted.

8. Device according to one of the preceding three claims,
**characterized in that**
the holder is designed as a rotary wheel (31).

9. Device according to one of the preceding claims,
**characterized in that**
at least one of the film guide elements is designed as a chill roller.

## Revendications

1. Dispositif de transport d'un film tubulaire (6), dans lequel le film tubulaire (6) est guidé sur au moins un premier élément de guidage de film (16), sur au moins un deuxième élément de guidage de film (25) et sur au moins un troisième élément de guidage de film (17), où le film tubulaire (6) peut évacuer dans la zone entre le premier et au moins un troisième élément de guidage de film et/ou dans la zone des éléments de guidage de film la chaleur à son environnement,
où l'écart entre le premier et le deuxième élément de guidage de film peut être modifié,
**caractérisé en ce qu'**au moins un deuxième élément de guidage de film (25) est ajustable relativement au premier élément de guidage de film (16) de telle sorte que le film tubulaire (6) peut être dévié du trajet direct entre le premier et le troisième élément de guidage de film de sorte que la longueur de trajet du film tubulaire parcourue entre le premier et le troisième élément de guidage de film peut être modifiée.

2. Dispositif selon la revendication 1,
**caractérisé en ce que** l'écart entre le premier et le deuxième élément de guidage de film peut être modifié progressivement.

3. Dispositif selon l'une des deux revendications précédentes, **caractérisé en ce que** le premier élément de guidage de film fait partie d'une première paire de cylindres (25), à travers la fente de cylindre de celle-ci, le film tubulaire entre dans une zone de refroidissement, et **en ce que**
le deuxième élément de guidage de film fait partie d'une deuxième paire de cylindres (25) à travers la fente de cylindre de celle-ci le film tubulaire quitte la zone de refroidissement.

4. Dispositif selon l'une des revendications précédentes, **caractérisé en ce qu'**au moins deux deuxièmes éléments de guidage de film (25) sont prévus qui sont disposés de manière à être décalés ou déplacés relativement au premier et/ou troisième élément de guidage de film.

5. Dispositif selon la revendication précédente, **caractérisé en ce qu'**au moins deux deuxièmes éléments de guidage de film précités sont logés dans des moyens de retenue.

6. Dispositif selon la revendication précédente, **caractérisé en ce que** les moyens de retenue sont logés d'une manière tournante dans le bâti de machine (30).

7. Dispositif selon la revendication précédente, **caractérisé en ce que** les moyens de retenue sont pourvus d'un moyen d'entraînement par lequel l'angle de rotation est réglable.

8. Dispositif selon l'une des trois revendications précédentes, **caractérisé en ce que** les moyens de retenue sont réalisés comme plateau tournant (31).

9. Dispositif selon l'une des revendications précédentes, **caractérisé en ce qu'**au moins l'un des éléments de guidage de film est réalisé comme cylindre de refroidissement.
